# EUROPEAN PATENT SPECIFICATION

(11) **EP 0 624 313 B1**
(45) Date of publication and mention of the grant of the patent: **02.09.1998**
(21) Application number: 94201236.0
(22) Date of filing: 03.05.1994
(51) Int. Cl.: A01K 11/00, A01K 29/00

(54) **Method and device for automatically observing the behavior of animals**
Verfahren und Vorrichtung zur automatischen Beobachtung des Verhaltens von Tieren
Procédé et dispositif pour l'observation automatique du comportement d'animaux

(30) Priority: 03.05.1993 NL 9300740
(43) Date of publication of application: 17.11.1994
(73) Proprietor: N.V. Nederlandsche Apparatenfabriek NEDAP, NL-7141 DE Groenlo (NL)
(72) Inventor: Roosenschoon, Pieter Lieuwe, NL-7104 BC Winterswijk-Meddo (NL); Loosveld, Serge Louis, NL-7141 WB Groenlo (NL)
(74) Representative: Smulders, Theodorus A.H.J., Ir.

(56) References cited:
- GB-A- 2 076 259
- US-A- 4 463 353
- US-A- 4 617 876
- US-A- 5 163 380

## Description

The invention relates to a method for automatically observing the behavior of animals. The invention also relates to an apparatus for automatically observing the behavior of animals comprising one or more automatic identification devices which are adapted to automatically recognize animals provided with a suitable identification label in a number of predetermined zones in a space where animals are housed, and which generate a signal upon recognition of an animal; at least one registration unit which is coupled with the identification devices and stores the signals provided by the identification devices.

Automatic recognition of animals is already employed on a large scale in stock farming.

British patent application 2,076,259 discloses such a method and apparatus for determining the extent of activity of animals, such as cows. For that purpose, each animal has been fitted with a detector which detects the number of movements of the animal and converts them into a number. Together with an identification code, the number can be read out electronically by means of a transceiver. From a cow's motion activity as expressed by the number, it can be derived whether the cow is estrous.

In the known systems for the automatic recognition of animals, typically use is made of a system which comprises a transmitter and a receiver or a combined transmitter/receiver (transceiver) and which generates an electromagnetic or magnetic field in one or more predetermined zones. The animals to be recognized are each fitted with an electronic or magnetic responder which contains a unique code for the animal in question. The code of such a responder can be detected by the receiver or transceiver as soon as the animal, and thus the responder of the animal, is located in one of the predetermined zones.

According to the known technique, the detection of an animal at a certain location is subsequently used to initiate a certain action, such as for instance the administration of feed, the automatic application of a milk claw of a milking machine, opening and/or closing one or more gates, measuring the animal's weight, et cetera.

A system for automatically recognizing, for instance, animals is generally described in applicant's French patent 7732938. Further, U.S. Patent No. 4,617,876 discloses a system especially adapted for automatically determining the weight of a cow after it has been electronically identified is a feed stall.

With domestic animals, certain behavioral characteristics are known to proceed according to more or less fixed patterns. The behavioral patterns can be specific for an individual animal, but it is also possible that a pattern is normally the same for all animals. The behavioral patterns of animals are determined for an important part by the displacement patterns of the animals. Behavioral patterns occur both with animals that are kept solitary and with animals being housed in groups. Group housing has as a reinforcing effect that relations between animals (social order) can lead to certain behavioral patterns.

With pigs housed in groups, for instance, the order in which the pigs visit the feeding place is known to correlate with the relative rank of the animals in the social order in the event where the number of feeding positions is limited.

It is also known that deviations in the patterns can often be traced to fertility phenomena (in particular rut and heat) or health disorders (for instance lameness). Thus, a pig of high rank in the social order and always one of the first to come to the feeding place will, in case of illness, most likely be demoted to a lower rank and consequently be forced to eat later.

Because deviant animal behavior often leads to a lower production level, it is important that animals with deviant behavior be signaled at an early stage. For this purpose, in current practice the animals have to be checked visually for some time, several times a day.

The invention contemplates the provision of a method and apparatus for automatically observing the behavior of individual animals or, if so desired, groups of animals. The method according to the invention is characterized in that in the space where the animals are housed, at least one antenna device of an automatic identification device is arranged, which is capable of automatically identifying animals provided with an identification means as soon as they are located in a predetermined zone near the antenna device, and that the number of visits per animal or per group of animals to a predetermined zone per period of time is registered.

The invention has a number of advantages over the visual method. Firstly, deviant behavior can be ascertained sooner, secondly, signaling can be more reliable by virtue of the continuous character of the observation and, thirdly, the invention can lead to a significant saving of labor.

The object of the invention is to enable registration of animal behavior by means of automatic, for instance electronic, recognition, and to enable the signaling of deviant animal behavior, optionally with suitable software. Moreover, on the basis of the signaled deviations, a pronouncement may possibly be made about the cause of the deviation, in particular in the sphere of fertility and health.

As described above, this system is based on automatic, preferably electronic, recognition. A transceiver unit can register the visits to feeding places, milking positions, drinking stations or other places for every animal fitted with an identification label, which may for instance be of the type described in French patent 7732938.

In this way, the number of visits per unit time or period of time (24 hours, a week, etc.) can be recorded for each animal.

The apparatus of the above-described type is characterized, according to the invention, in that the registration unit stores the signals provided by the identification devices together with a time signal whereby the registration device is provided with or is coupled with a processing apparatus which, in use, determines the number of visits per animal or per group of animals to a predetermined zone per period of time on the basis of the stored signals.

In the following, the invention will be further described with reference to the accompanying drawings.
Fig. 1 schematically shows an example of a map of animal quarters where the invention can be applied;
Fig. 2 schematically shows, by way of example, a graphic representation of the possible number of visits per unit time of an animal to a specific station provided with a recognition unit;
Fig. 3 schematically shows an example of a frequency distribution curve of the number of visits per unit time;
Fig. 4 schematically shows an example of the duration of a visit of an animal to a specific station during a certain period of time;
Fig. 5 shows, by way of example, a frequency distribution curve of the duration per visit;
Fig. 6 shows, by way of example, a frequency distribution curve of the cumulative duration of a visit in a certain period of time;
Fig. 7 graphically shows, by way of example, the serial number of the first visit of an animal to a specific station measured over a number of days; and
Fig. 8 schematically shows an example of a frequency distribution curve of the rank of the first visit of an animal to a specific station over a number of days.

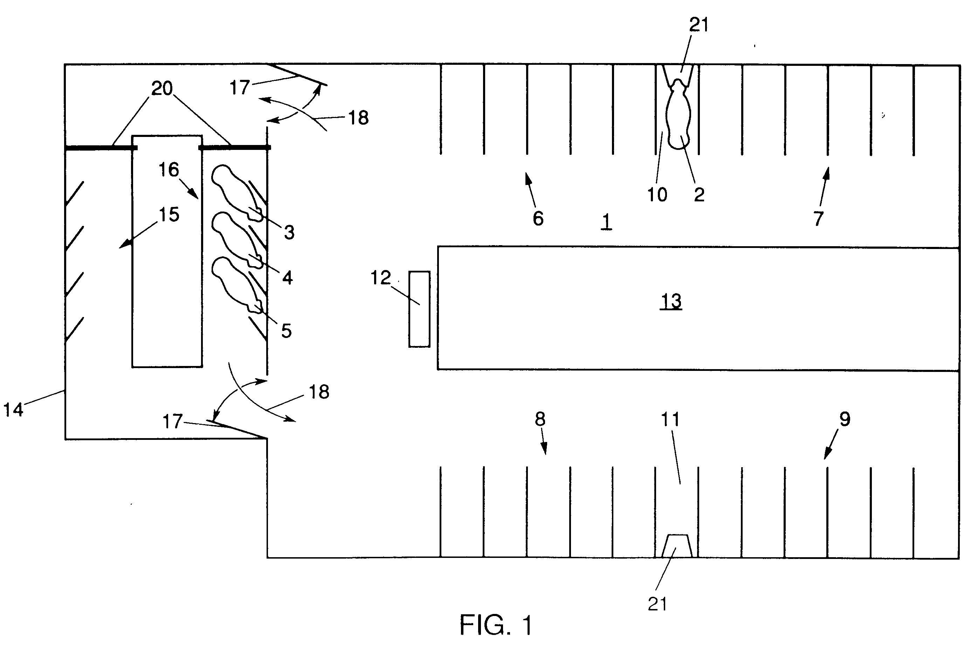

Fig. 1 schematically shows an example of a map of animal quarters which are suitable for the practice of the invention. The example shown concerns a stable 1 for milk cows. A few cows are schematically indicated at 2, 3, 4 and 5. The stable shown comprises a plurality of cubicles 6, 7, 8, 9; feeding stations 10, 11; a drinking station or drinking trough 12; a feeding floor 13 where the roughage for the animals is deposited. The stable further comprises a milking parlor 14 with a plurality of milk stands 15, 16, where the cows, such as the cows 3-5, can be milked. The milking parlor is connected with the rest of the quarters by way of passages 18, which, in this example, comprise gates 17.

In the example shown, the entrances to the milk stands are provided with antennas 20, which are connected with transceiver devices arranged *in situ* or elsewhere. Further, the feeding stations 10, 11 are each provided with a transceiver device 21, or with antennas therefor.

If desired, antennas of transceiver devices can be arranged at more points, for instance at the drinking trough(s), in the cubicles, at the exit of the milking parlor, etc.

Each animal whose behavior is to be investigated is provided with a suitable identification means, such as for instance an electronic responder, which generates a code signal associated with the animal in question as soon as the responder comes within reach of an antenna of a transceiver device. The transceiver device can recognize the received code signal, so that it can be registered at what time and how long the animal in question is located at a specific place.

On the basis of these data, visiting frequencies (the number of visits to a specific station per unit time, for instance per day), displacement patterns, etc., can be determined for each animal, and, if desired, reproduced. For that purpose, the transceiver devices can be connected with a suitable computer. In that case, variations in the displacement patterns, visiting frequencies, etc., can also be determined and optionally reproduced.

The relative order in which the animals visit a certain station, as well as variations therein, can also be determined.

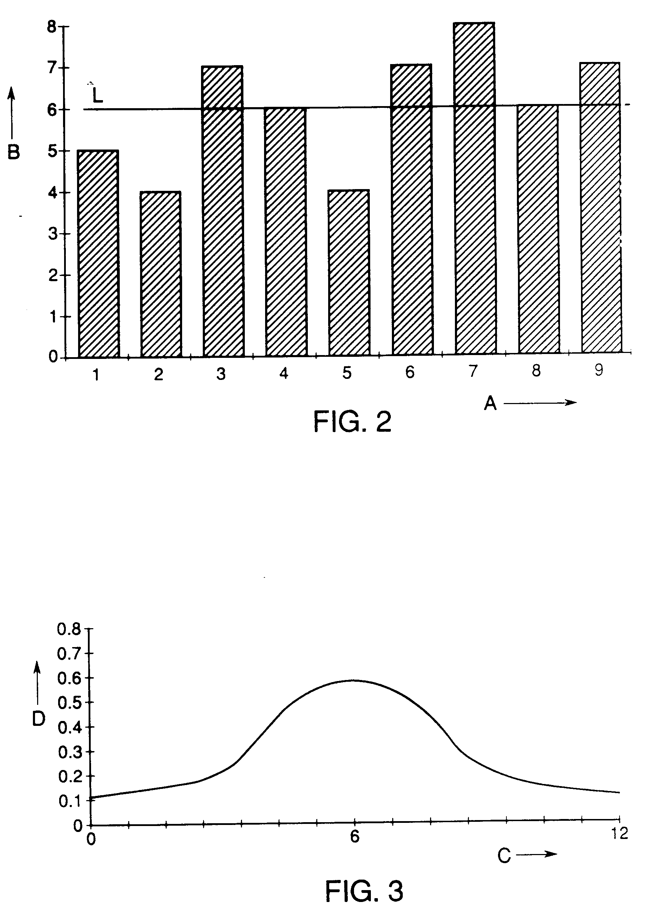

In Fig. 2 the number of visits per day of an animal to a specific station is depicted. The number of visits is indicated by B, the day number by A. The line L indicates the average.

Fig. 3 shows a frequency distribution of the number of visits per day (C) of an animal measured over a number of days. The probability is denoted by D. The probability of zero or twelve visits per day to the station in question is 0.1 in Fig. 3. By means of known statistical techniques for calculating variations and standard deviations and the like, a deviation can be signaled.

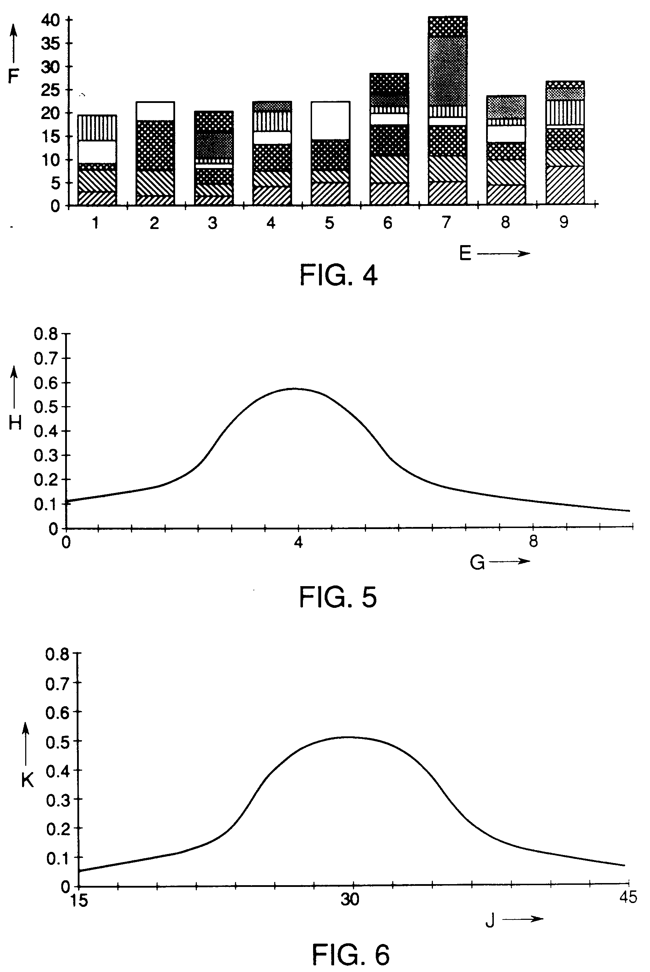

With the transceiver units described, the duration of each visit can be determined as well. On the basis of deviations in the average duration of a visit of an animal or in the total cumulative duration in a specified period of time, deviations of animals can be signaled. Examples are depicted in Figs. 4, 5 and 6.

Fig. 4 shows the duration of each visit (F) over a series of days (E). Both the length of each visit separately and the total duration of visits per day can be read from the diagram.

Fig. 5 is a frequency distribution of the duration per visit of an animal over a number of days. The probability is denoted by H, the duration in minutes by G.

Fig. 6 gives a frequency distribution of the cumulative duration per day over a number of days. K denotes the probability, J the duration in minutes.

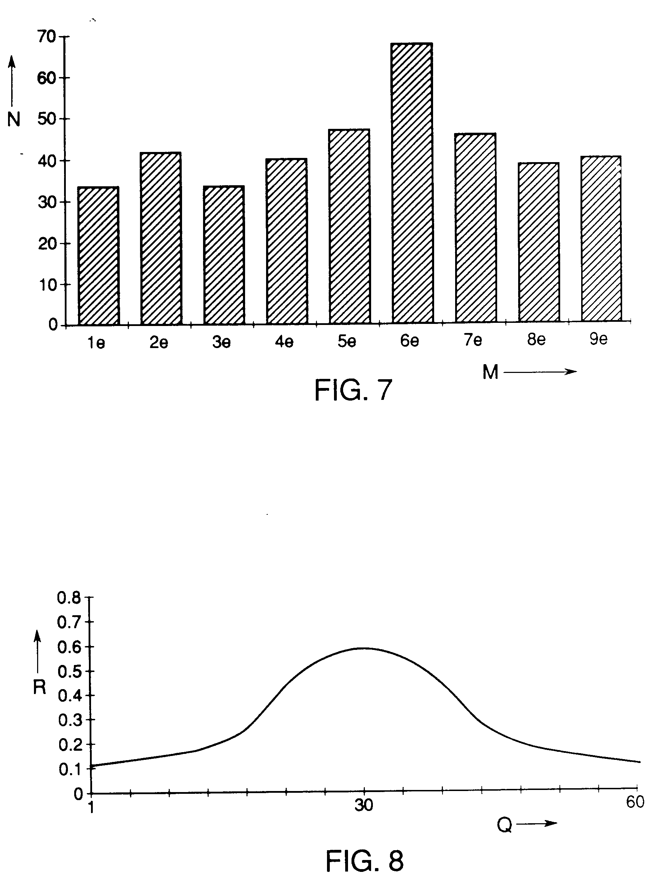

In addition to the number of visits per unit time, it is also possible to determine, per transceiver unit or per group of transceiver units, the order of visits by animals from a specified time (see Figs. 7 and 8).

Fig. 7 gives the serial number (N) of the first visit an animal has made to the transceiver unit from a specified starting time over a number of days (M).

Fig. 8 gives a frequency distribution of the rank of the first visit of an animal to a specific station on a number of days. The probability is denoted by R, the serial number of the first visit by Q.

Any deviations in the order can lead to the signaling of an animal with deviant behavior.

In order to increase the reliability of signaling or to enable the cause of a signaled deviation to be indicated, it may be useful to couple the above-described behavior recognition methods to animal-related quantities that are already conventionally measured, such as weight, feed uptake, milk yield, temperature, the conductivity of the milk, activity, water uptake, reproduction status, etc. Through such a coupling, signals can be generated at an earlier stage as well as acquire a higher reliability.

It is also possible, if so desired, to study and compare the behavior of animals per group. Since the age of each animal is known, the processing unit can, for instance, reproduce the behavioral features of young animals separately and compare them with those of other animals.

In the case of significantly deviant behavior of an individual animal, it is possible, if desired, for an automatic alarm signal to be given by means of a suitable signaling device, so that the stock farmer's attention is positively drawn to the deviant animal and, if necessary, measures can be taken.

Although electronic identification systems are very suitable for the practice of the invention, any other type of identification system can be used as well.

These and similar modifications are understood to fall within the scope of the invention.

## Claims

1. A method for automatically observing the behavior of animals, whereby in the space where the animals are housed, at least one antenna device of an automatic identification device is arranged, which is capable of automatically identifying animals provided with an identification means as soon as they are located in a predetermined zone near the antenna device, characterized in that the number of visits per animal or per group of animals to a predetermined zone per period of time is registered.

2. A method according to claim 1, characterized in that also the duration of the number of visits per period of time is determined, per visit and/or cumulatively.

3. A method according to claim 1 or 2, characterized in that the order in which the animals visit a predetermined zone per period of time is determined.

4. A method according to any one of the preceding claims, characterized in that the data relating to a period of time are compared with data relating to other periods of time, so as to enable deviations to be ascertained.

5. A method according to any one of the preceding claims, characterized in that the data obtained are combined with other available quantities regarding the animal which are conventionally determined, so as to detect deviations of the animal reagarding health and/or reproduction.

6. Apparatus for automatically observing the behavior of animals comprising one or more automatic identification devices which are adapted to automatically recognize animals provided with a suitable identification label in a number of predetermined zones in a space where animals are housed, and which generate a signal upon recognition of an animal; at least one registration unit which is coupled with the identification devices and stores the signals provided by the identification devices, characterized in that the registration unit stores the signals provided by the identification devices together with a time signal whereby the registration device is provided with or is coupled with a processing apparatus which, in use, determines the number of visits per animal or per group of animals to a predetermined zone per period of time on the basis of the stored signals.

7. Apparatus according to claim 6, characterized in that the registration device is provided with or is coupled with a processing apparatus adapted to process the signals into statistical data and to compare them with previous signals.

8. Apparatus according to claim 7, characterized in that the processing apparatus is coupled with a signaling device adapted to signal a significant deviation between the signals being compared.

9. Apparatus according to claim 7 or 8, characterized in that the processing apparatus has one or more inputs to which other quantities regarding each individual animal are provided.

10. Apparatus according to any one of claims 7-9, characterized in that the processing apparatus is adapted to distinguish signals coming from animals belonging to different groups and, after the signals have been processed or not, to compare them with each other.

11. Apparatus according to any one of claims 7-10, characterized in that the processing apparatus is a computer which has been programmed with suitable software.

12. Apparatus according to any one of claims 7-11, characterized in that the registration device is part of a computer which also constitutes the processing apparatus.

13. Stable arrangement for the practice of the method according to any one of claims 1-5, characterized by a plurality of zones in which a plurality of automatic behaviour observing apparatus according to any one of the claims 6-12 can automatically recognize an animal provided with an identification means.

14. Stable arrangement according to claim 13, characterized in that the recognition devices are electronic identification devices and that the zones are formed by electromagnetic interrogation fields which in operation are formed by means of antenna devices of the identification devices.

15. Stable arrangement according to claim 13 or 14, characterized by at least one registering and processing apparatus, coupled with the identification device, which can register and process the recognition of an animal together with the zone where the recognition occurred and data about the time.

## Patentansprüche

1. Verfahren zum automatischen Beobachten des Verhaltens von Tieren, bei welchem in dem Raum, in dem die Tiere untergebracht sind, wenigstens eine Antennenvorrichtung einer automatischen Identifikationsvorrichtung angeordnet ist, die mit einem Identifikationsmittel versehene Tiere automatisch erkennen kann, sobald sie sich in einer vorbestimmten Zone nahe der Antennenvorrichtung befinden,
**dadurch gekennzeichnet,**
daß die Anzahl der Besuche je Tier oder je Tiergruppe bei einer vorbestimmten Zone je Zeitspanne registriert wird.

2. Verfahren nach Anspruch 1, dadurch gekennzeichnet, daß auch die Dauer der Anzahl der Besuche je Zeitspanne, je Besuch und/oder kumulativ bestimmt wird.

3. Verfahren nach Anspruch 1 oder 2, dadurch gekennzeichnet, daß die Reihenfolge, in der die Tiere eine vorbestimmte Zone je Zeitspanne besuchen, bestimmt wird.

4. Verfahren nach einem der vorhergehenden Ansprüche, dadurch gekennzeichnet, daß die auf eine Zeitspanne bezogenen Daten mit auf eine andere Zeitspanne bezogenen Daten zum Feststellen von Abweichungen verglichen werden.

5. Verfahren nach einem der vorhergehenden Ansprüche, dadurch gekennzeichnet, daß die erhaltenen Daten mit anderen erhältlichen, auf herkömmliche Weise bestimmten das Tier betreffenden Größen kombiniert werden, um Abweichungen des Tiers bezüglich der Gesundheit und/oder der Vermehrung festzustellen.

6. Vorrichtung zum automatischen Beobachten des Verhaltens von Tieren mit einer oder mehreren automatischen Identifikationsvorrichtungen zum automatischen Wahrnehmen von mit einer geeigneten Identifikationsmarkierung versehenen Tieren in einer Anzahl von vorbestimmten Zonen in einem Raum, in dem die Tiere untergebracht sind, und zum Erzeugen eines Signals beim Wahrnehmen eines Tieres; wenigstens einer Registriereinheit, die mit den Identifikationsvorrichtungen verbunden ist und die von den Identifikationsvorrichtungen bereitgestellten Signale speichert,
dadurch gekennzeichnet,
daß die Registriereinheit die von den Identifikationsvorrichtungen bereitgestellten Signale zusammen mit einem Zeitsignal speichert, wobei die Registriereinheit mit einer Verarbeitungsvorrichtung versehen oder verbunden ist, die im Betrieb die Anzahl von Besuchen je Tier oder je Tiergruppe in einer vorbestimmten Zone je Zeiteinheit auf der Basis der gespeicherten Signale bestimmt.

7. Vorrichtung nach Anspruch 6, dadurch gekennzeichnet, daß die Registriervorrichtung mit einer Verarbeitungsvorrichtung versehen oder verbunden ist, um die Signale zu statistischen Daten zu verarbeiten und diese mit früheren Signalen zu vergleichen.

8. Vorrichtung nach Anspruch 7, dadurch gekennzeichnet, daß die Verarbeitungsvorrichtung mit einer Signalisierungsvorrichtung verbunden ist, um eine signifikante Abweichung zwischen den verglichenen Signalen zu signalisieren.

9. Vorrichtung nach Anspruch 7 oder 8, dadurch gekennzeichnet, daß die Verarbeitungsvorrichtung einen oder mehrere Eingänge hat, an denen andere, jedes einzelne Tier betreffende Größen bereitgestellt werden.

10. Vorrichtung nach einem der Ansprüche 7-9, dadurch gekennzeichnet, daß die Verarbeitungsvorrichtung Signale unterscheiden kann, die von Tieren verschiedener Gruppen kommen und diese, nachdem die Signale verarbeitet wurden oder nicht, miteinander vergleichen kann.

11. Vorrichtung nach einem der Ansprüche 7-10, dadurch gekennzeichnet, daß die Verarbeitungsvorrichtung ein mit geeigneter Software programmierter Computer ist.

12. Vorrichtung nach einem der Ansprüche 7-11, dadurch gekennzeichnet, daß die Registriervorrichtung Bestandteil eines Computers ist, der auch die Verarbeitungsvorrichtung bildet.

13. Stallanordnung zum Anwenden des Verfahrens nach einem der Ansprüche 1-5, gekennzeichnet durch eine Mehrzahl von Zonen, in denen eine Mehrzahl automatischer Verhaltensbeobachtungsvorrichtungen nach einem der Ansprüche 6-12 automatisch ein mit einem Identifikationsmittel versehenes Tier wahrnehmen kann.

14. Stallanordnung nach Anspruch 13, dadurch gekennzeichnet, daß die Wahrnehmungsvorrichtungen elektronische Identifikationsvorrichtungen sind, und daß die Zonen durch elektromagnetische Abfragefelder gebildet sind, die im Betrieb durch Antennenvorrichtungen der Identifikationsvorrichtungen gebildet sind.

15. Stallanordnung nach Anspruch 13 oder 14, gekennzeichnet durch wenigstens eine Registrier- und Verarbeitungsvorrichtung, die mit der Identifikationsvorrichtung verbunden ist und das Wahrnehmen eines Tieres zusammen mit der Zone, in der die Wahrnehmung auftritt, und zusammen mit Zeitdaten registrieren und verarbeiten kann.

## Revendications

1. Procédé pour l'observation automatique du comporterment d'animaux, selon lequel on dispose au moins un dispositif formant antenne d'un dispositif d'identification automatique qui est capable d'identifier automatiquement des animaux, pourvus d'un moyen d'identification, dès que ceux-ci se trouvent dans une zone prédéterminée proche du dispositif formant antenne, caractérisé en ce que l'on enregistre le nombre d'incursions dans une zone prédéterminée par animal ou groupe d'animaux et par période de temps.

2. Procédé selon la revendication 1, caractérisé en ce que l'on détermine aussi, par visite et/ou de façon cumulative, la durée du nombre d'incursions par période de temps.

3. Procédé selon la revendication 1 ou 2, caractérisé en ce que l'on détermine l'ordre des incursions des animaux dans une zone prédéterminée par période de temps.

4. Procédé selon l'une quelconque des revendications précédentes, caractérisé en ce que l'on compare les données concernant une période de temps avec des données concernant d'autres périodes de temps, de manière que l'on puisse constater des écarts.

5. Procédé selon l'une quelconque des revendications précédentes, caractérisé en ce que l'on combine les données obtenues avec d'autres grandeurs disponibles qui concernent l'animal et qui ont été déterminées de façon classique, afin de détecter des écarts en ce qui concerne la santé et/ou la reproduction de l'animal.

6. Appareil pour l'observation automatique du comportement d'animaux, comprenant: un ou plusieurs dispositifs d'identification automatiques qui sont adaptés pour reconnaître automatiquement des animaux, pourvus d'une étiquette d'identification appropriée, dans plusieurs zones prédéterminées d'un espace où sont logés ou parqués les animaux et qui génèrent un signal lors de la reconnaissance d'un animal ; au moins une unité d'enregistrement qui est couplée aux dispositifs d'identification et qui stocke les signaux fournis par les dispositifs d'identification, caractérisé en ce que l'unité d'enregistrement stocke les signaux fournis par les dispositifs d'identification conjointement avec un signal de temps, le dispositif d'enregistrement étant pourvu d'un appareil de traitement ou étant couplé à cet appareil de traitement qui, pendant l'utilisation, détermine le nombre d'incursions dans une zone prédéterminée par animal ou groupe d'animaux et par période de temps sur la base des signaux stockés.

7. Appareil selon la revendication 6, caractérisé en ce que le dispositif d'enregistrement est pourvu d'un appareil de traitement ou est couplé à cet appareil de traitement adapté pour transformer par traitement les signaux en données statistiques et pour les comparer avec des signaux antérieurs.

8. Appareil selon la revendication 7, caractérisé en ce que l'appareil de traitement est couplé à un dispositif de signalisation adapté pour signaler un écart important entre les signaux comparés.

9. Appareil selon la revendication 7 ou 8, caractérisé en ce que l'appareil de traitement comporte une ou plusieurs entrées auxquelles d'autres grandeurs concernant chaque animal individuel sont fournies.

10. Appareil selon l'une quelconque des revendications 7 - 9, caractérisé en ce que l'appareil de traitement est adapté pour distinguer des signaux arrivant d'animaux appartenant à des groupes différents et, après que les signaux ont été traités ou non, pour les comparer les uns avec les autres.

11. Appareil selon l'une quelconque des revendications 7 - 10, caractérisé en ce que l'appareil de traitement est un ordinateur qui a été programmé avec un logiciel approprié.

12. Appareil selon l'une quelconque des revendications 7 - 11, caractérisé en ce que le dispositif d'enregistrement fait partie d'un ordinateur qui constitue aussi l'appareil de traitement.

13. Agencement d'étable pour la mise en oeuvre du procédé selon l'une quelconque des revendications 1 - 5, caractérisé par une pluralité de zones dans lesquelles une pluralité d'appareils d'observation automatique de comportement selon l'une quelconque des revendications 6 - 12 peuvent automatiquement reconnaître un animal pourvu d'un moyen d'identification.

14. Agencement d'étable selon la revendication 13, caractérisé en ce que les dispositifs de reconnaissance sont des dispositifs d'identification électroniques et en ce que les zones sont formées par des champs électromagnétiques d'interrogation qui, pendant le fonctionnement, sont créés au moyen de dispositifs, formant antennes, des dispositifs d'identification.

15. Agencement d'étable selon la revendication 13 ou 14, caractérisé par au moins un appareil d'enregistrement et de traitement qui est couplé au dispositif d'identification et qui peut enregistrer et traiter la reconnaissance d'un animal, conjointement avec la zone où a eu lieu la reconnaissance, et des données concernant le temps.
